(19) Europäisches Patentamt
European Patent Office
Office européen des brevets

(11) Publication number: 0 246 329 A1

(12) # EUROPEAN PATENT APPLICATION

published in accordance with Art. 158(3) EPC

(21) Application number: 86906466.7

(22) Date of filing: 08.11.86

Data of the international application taken as a basis:

(86) International application number: PCT/JP86/00569

(87) International publication number: WO87/02977 (21.05.87 87/11)

(51) Int.Cl.$^3$: C 03 C 27/12
C 09 J 3/14, B 32 B 17/04

(30) Priority: 08.11.85 JP 248983/85
20.05.86 JP 113539/86
20.05.86 JP 113540/86

(43) Date of publication of application: 25.11.87 Bulletin 87/48

(84) Designated Contracting States: DE FR GB

(71) Applicant: Showa Denko Kabushiki Kaisha
10-12, Shiba Daimon 2-chome Minato-ku
Tokyo 105(JP)

(72) Inventor: SAKON, Yuichi
Showadenko-syataku 104 4-19-14, Tamagawa
Setagaya-ku Tokyo 158(JP)

(72) Inventor: AKOI, Shoji
4-29-5-402, Takinoi Funabashi-shi
Chiba 274(JP)

(72) Inventor: OTANI, Taketsugu
SDK-syataku 125 1-16-1, Irie
Kanagawa-ku Yokohama-shi Kanagawa 221(JP)

(72) Inventor: KOIDE, Masashi
208-8, Nishishiba Kanazawa-ku
Yokohama-shi Kanagawa 236(JP)

(72) Inventor: MAEDA, Masahiko
1-23-6, Matsubara
Setagaya-ku Tokyo 156(JP)

(72) Inventor: MOTEKI, Yoshihiro
1317-6, Oaza-Ino
Oita-shi Oita 870-01(JP)

(72) Inventor: IWASHITA, Toshiyuki
Showadenko-syataku S4-109
37, Oaza-Nishiakeno Oita-shi Oita 870-01(JP)

(74) Representative: Arthur, Bryan Edward et al,
Withers & Rogers 4 Dyer's Buildings Holborn
London EC1N 2JT(GB)

(54) **SAFETY-GLASS INTERLAYER.**

(57) A safety-glass interlayer which comprises a mixture of at least two crosslinked or uncrosslinked ethylenic copolymers. This interlayer has excellent water resistance, penetration resistance, adhesion workability, and good transparency.

EP 0 246 329 A1

0246329

## DESCRIPTION

# Intermediate Film for Laminated Glass

## TECHNICAL FIELD

This invention relates to an intermediate film or sheet (the same hereinbelow) for laminated glass, comprising a thin product of a mixture of at least two noncrosslinked or crosslinked ethylenic copolymers. This intermediate film for laminated glass not only has an excellent water resistance, penetration resistance, and adhesion workability, but also a good transparency.

## BACKGROUND ART

For laminated glass which has been used for vehicles such as automobiles, construction materials, ships and other installations in which shock impact is felt, to reduce the weight, improve the antivibration characteristic, and improve the safety, etc., there have been used laminated glasses obtained by interposing a thermoplastic resin (e.g. butyral resin) as the intermediate layer between two sheets of glass plates, followed by heating and pressure contact. However, butyral resin intermediate films and cellulose type resin intermediate films generally used in the prior art suffer from peeling, because water can penetrate from the end portions due to an inferior water resistance.

Also, it has been proposed to add 25 to 40 parts by weight of a plasticizer to 100 parts by weight of a butyral resin, whereby flexibility is imparted and the impact resistance is improved, (e.g., see Japanese Unexamined Patent Publication (Kokai) No. 47-12743). However, powder of sodium bicarbonate is sprayed on the surface of the plasticized butyral resin film to prevent blocking, because the film surface has a strong tackiness, and therefore, has a drawback in that the workability thereof is inferior when conducting adhesion work.

Further, various ethylenic copolymers other than

these intermediate films of butyral resin and cellulose type resin have been proposed. Typical examples include intermediate films of ethylene-vinyl acetate copolymer (Japanese Unexamined Patent Application (Kokai) No. 49-28610), ethylene-methyl methacrylate copolymer (Japanese Unexamined Patent Application (Kokai) No. 48-79817), ethylene-acrylic acid copolymer (Japanese Unexamined Patent Application (Kokai) No. 47-7396), saponified product of ethylene-vinyl acetate copolymer (Japanese Unexamined Patent Application (Kokai) No. 49-100105), metal salt of ethylene-acrylic acid copolymer (Japanese Unexamined Patent Application (Kokai) No. 50-25642) and ethylene-methacrylic acid copolymer (Japanese Unexamined Patent Application (Kokai) No. 49-59115), but these laminated glasses do not have a satisfactory transparency, adhesiveness, and penetration resistance.

Further, a method has also been proposed to improve penetration resistance by use of a crosslinked intermediate film of a crosslinkable ethylenic copolymer composition, and crosslinking the composition during or after lamination with the glass (Japanese Unexamined Patent Applications (Kokai) Nos. 58-60645, 58-79848), but according to this method, since the intermediate film is not crosslinked, the drawback of an inferior adhesion workability arises.

DISCLOSURE OF THE INVENTION

Accordingly, an object of the present invention is to eliminate the drawbacks (problems) of the prior art as described above and obtain an intermediate film for laminated glass which not only has an excellent adhesiveness between the glass plates and the intervening thermoplastic resin, but also has a good water resistance and penetration resistance, and yet has an excellent adhesion workability and transparency, according to a simple method.

According to the present invention, the above

problems can be solved by an intermediate film for laminated glass which is a thin product of a mixture of noncrosslinked or crosslinked ethylenic copolymers with 15 to 90 wt.% of "extraction residue after extraction treatment with boiling toluene for 3 hours" (hereinafter called "extraction residue"), the mixture of these ethylenic copolymers comprising any combination of the respective components shown below.

(A) A copolymer of ethylene at copolymerized ratio of 50 to 99.98 mol%, an "unsaturated monocarboxylic acid having 3 to 30 carbon atoms or unsaturated dicarboxylic acid having 4 to 30 carbon atoms, anhydride thereof and/or half ester thereof" [hereinafter called "comonomer component (1)"] at a copolymerized ratio of 0.01 to 20 mol% and an "unsaturated carboxylic acid ester having at most 30 carbon atoms and/or vinyl ester having at most 30 carbon atoms" [hereinafter called "comonomer component (2)"] at a copolymerized ratio of at most 30 mol%, or of these copolymers, modified product comprising the copolymer having dicarboxylic acid group and/or dicarboxylic acid anhydride group and having converted these groups to half ester with a alcohol [hereinafter called "ethylenic copolymer (A)"].

(B1) An ethylenic copolymer of ethylene at copolymerized ratio of 50 to 99.98 mol%, an "epoxy type compound having epoxy group and having at least one double bond with carbon atoms of 6 to 30 [hereinafter called "comonomer component (3)"] at copolymerized ratio of 0.02 to 20 mol% and the comonomer component (2) at copolymerized ratio of at most 30 mol% [hereinafter called "ethylene copolymer (B1)"].

(B2) An ethylenic copolymer of ethylene at copolymerized ratio of 50 to 99.98 mol%, a "monomer having hydroxyl group and/or amino group and at least one double bond with carbon atoms with at most 30 carbon atoms" [hereinafter called "comonomer component (4)"] and further the comonomer component (2) at copolymerized

ratio of at most 30 mol% [hereinafter called "ethylenic copolymer (B2)"].

(C) This component comprises "dibenzylidenesorbitol or substituted dibenzylidenesorbitol" (hereinafter called "dibenzylidenesorbitol type compound"), the mixing ratio of the ethylenic type copolymer (A) comprising 1 to 99 wt.% of the total amount of these ethylenic copolymers, the copolymer of ethylene units in either ethylenic copolymer being 50 to 99.98 mol%, and the mixing ratio of the dibenzylidenesorbitol type compound based on 100 parts by weight of the total amount of these ethylenic copolymers being at most 5.0 parts by weight.

(D) The mixing ratio of the carboxylic acid ester type plasticizer is at most 30 parts by weight based on 100 parts by weight of the total amount of the above ethylenic copolymers.

PREFERABLE EMBODIMENT FOR CARRYING OUT THE INVENTION

The present invention is described in detail below.

Ethylenic Copolymer (A)

The ethylenic copolymer (A) to be used in the present invention is a copolymer of ethylene, the comonomer component (1), and the comonomer component (2). The comonomer component (1) of this copolymer is an unsaturated monocarboxylic acid having 3 to 30 carbon atoms and an unsaturated dicarboxylic acid having 4 to 30 (preferably 4 to 20) carbon atoms, anhydride thereof and half ester thereof.

The unsaturated monocarboxylic acid which can be used in the present invention has 3 to 30 carbon atoms, more preferably 3 to 20 carbon atoms. Typical examples may include acrylic acid, methacrylic acid, crotonic acid, monoalkyl maleate, monoalkyl fumarate, etc.

Typical examples of the unsaturated dicarboxylic acid may include maleic acid, tetrahydrophthalic acid, fumaric acid, 4-methylcyclohexan-4-ene-1,2-carboxylic acid, itaconic acid, citraconic acid, phthalic acid and

bicyclo(2,2,1)-hepta-5-ene-2,3-dicarboxylic acid, (3,6-endomethylene-1,2,3,6-tetrahydro-cis-phthalic acid), etc.

The above half ester is obtained by converting these unsaturated dicarboxylic acid or anhydride units thereof to half ester units by alcoholic modification.

Of the multi-component copolymers of the present invention, copolymers of ethylene with unsaturated dicarboxylic acid or anhydride thereof or of these with the comonomer component (2) as described below can be also modified with an alcohol according to the solution method or the kneading method as described below.

The solution method is the method in which the reaction is carried out at the reflux temperature of the alcohol used in the presence or absence (the reaction is slower in the absence) of a catalyst (e.g. tertiary amine) in an organic solvent for 2 minutes to 5 hours, preferably 2 minutes to 2 hours, more preferably 15 minutes to 1 hour.

On the other hand, the kneading method is the method in which the reaction is carried out while kneading generally 0.01 to 1.0 parts by weight, preferably 0.05 to 0.5 parts by weight of a tertiary amine, and generally 0.1 to 3.0-fold mols, preferably 1.0 to 2.0-fold mols relative to the dicarboxylic acid unit in the copolymer of an unsaturated alcohol with 100 parts by weight of an ethylenic copolymer at a temperature which is higher than the melting point of the ethylenic multi-component copolymer but lower than the boiling point of the alcohol used, by means of a kneading machine such as banbury mixer, an extruding machine conventionally used in the field of rubber and synthetic resin, for several minutes to some 10 minutes, preferably 10 minutes to 30 minutes.

In the case of either the unsaturated dicarboxylic acid or anhydride thereof as mentioned above, or the case of the copolymer of at least ethylene and the

unsaturated dicarboxylic acid or anhydride thereof, the saturated alcohol to be used in modification with alcohol may be preferably a straight or branched saturated alcohol having 1 to 12 carbon atoms, typically methyl alcohol, ethyl alcohol, primary butyl alcohol. In the case of modification with an alcohol, the ratio of half ester conversion may be 0.5 to 100% in any case, preferably 10.0 to 100%.

The comonomer component (2) is an unsaturated carboxylic acid ester having at most 30, preferably not more than 20, carbon atoms and a vinyl ester having at most 30 (preferably at most 20) carbon atoms. Examples of the comonomer component (2) may include unsaturated carboxylic acid esters such as methyl (meth)acrylate, ethyl (meth)acrylate, alkoxyalkyl (meth)acrylate and diethyl fumarate and vinyl esters such as vinyl acetate and vinyl propionate.

As mentioned above, alkoxyalkyl (meth)acrylate generally has at most 20 carbon atoms, and those with alkyl group having 1 to 8 carbon atoms (preferably 1 to 4 carbon atoms) are preferred, and further, those with the alkoxy group having 1 to 8 carbon atoms (preferably 1 to 4 carbon atoms) are more preferable. Further preferred typical examples of alkoxyalkyl (meth)acrylate include methoxyethyl acrylate, ethoxyethyl acrylate, and butoxyethyl acrylate.

Ethylenic Copolymer (B1)

The ethylenic copolymer (B1) to be used in the present invention is a copolymer of ethylene and the comonomer component (3) or of these with the above comonomer component (2). The comonomer component (3) of this copolymer is an epoxy compound having an epoxy group and at least double bond with 6 to 30 carbon atoms. Typical examples of the epoxy type compound may include those of the formula shown below [formula (I) to formula (III)].

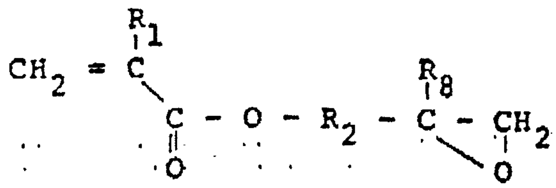

(I)

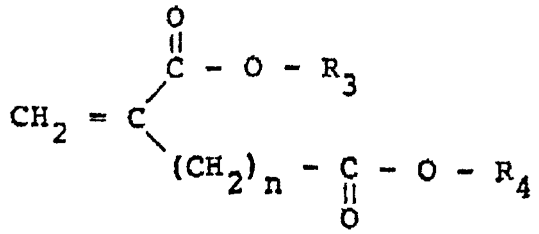

(II)

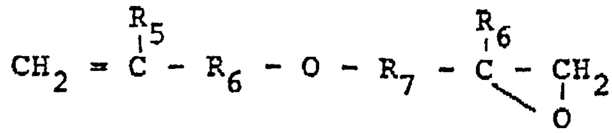

(III)

[In these formulae, $R_1$ , $R_5$ and $R_8$ , which may be either the same or different, represent hydrogen atom or methyl group, $R_2$ , $R_6$ and $R_7$ which may be either the same or different, represent straight or branched alkylene group having 1 to 12 carbon atoms, $R_3$ and $R_4$ represent methyl group or at least one thereof representing a straight or branched alkyl group having 2 to 12 carbon atoms containing glycidyl group (epoxy group) at the terminal end, but either one of $R_3$ and $R_4$ is an alkyl group containing glycidyl group, and <u>n</u> is 0 or 1.]

Typical examples of the monomers represented by the above formula (I) - (III) may include monoglycidyl butenecarboxylate, glycidyl methacrylate, glycidyl acrylate, α-methylglycidyl acrylate, α-methylglycidyl methacrylate, glycidyl itaconate, 7,8-epoxy-1-octyl methacrylate, methylglycidyl itaconate, 7,8-epoxy-1-octylvinyl ether, vinylglycidyl ether, allylglycidyl ether and methacrylglycidyl ether, etc.

<u>Ethylenic Copolymer (B2)</u>

The ethylenic copolymer (B2) to be used in the present invention is a copolymer of ethylene and the

comonomer component (4) or these with the above comonomer component (2). The comonomer component (4) is a monomer having hydroxyl group and/or amino group, and at least one double bond with at most 30 carbon atoms. Typical examples of the comonomer component (4) may include hydroxylalkyl (meth)acrylates (the alkyl group containing generally 1 to 25 carbon atoms), α-alkenyl alcohols having 3 to 25 carbon atoms, α-amines having 2 to 25 carbon atoms and primary or secondary aminoalkyl (meth)acrylates (the alkyl group having generally 1 to 25 carbon atoms), etc. Specific examples of such monomers may include hydroxymethyl (meth)acrylate, hydroxymethyl (meth)acrylate, hydroxypropyl (meth)acrylate, hydroxybutyl (meth)acrylate, hydroxyhexyl (meth)acrylate, allyl alcohol, allylamine and aminoethyl (meth)acrylate.

Further, a saponified product obtained by saponification of a copolymer of ethylene with vinyl ester (particularly vinyl acetate) can be also used as the ethylenic copolymer (B2) in the present invention.

Each copolymerized ratio of the ethylene in the above ethylenic copolymer (A), the ethylenic copolymer (B1) and the ethylenic copolymer (B2) is 50 to 99.98 mol%, preferably 60 to 99.8 mol%, particularly 65 to 99.0 mol%. On the other hand, the copolymerized ratio of the comonomer component (1), the comonomer (3) and the comonomer (4) is 0.01 to 20 mol%, each being preferably 0.1 to 20 mol%, particularly preferably 0.1 to 15 mol%. If the total amount of the copolymerized ratio of the comonomer component (1) in said copolymer is less than 0.01 mol%, the adhesion with glass is not good. On the other hand, a copolymer in excess of 20 mol% is used, and the specific feature of the present invention can be exhibited, but this is not preferable from the manufacturing and economy viewpoints. Further, the copolymerized ratio of the comonomer component (2) is at most 30 mol%, preferably 0.1 to 30 mol%, more

preferably 0.5 to 25 mol%. If a copolymer with the copolymerized ratio of the comonomer component (2) exceeds 30 mol% as the total amount, the softening point of the copolymer becomes higher, and thus not only is fluidity undesirably impaired, but also it is economically undesirable.

These ethylenic copolymers can be generally obtained by copolymerization of ethylene, the comonomer component (1) and the comonomer component (2) or ethylene and the comonomer component (3) or the comonomer component (4) or of these with the comonomer component (2) in the presence of a chain transfer initiator (e.g. oxygen, organic peroxide, azo compound, diazo compound) under high pressure of 500 to 3000 $kg/cm^2$ at a temperature range of 40 to 300°C. During copolymerization, saturated or unsaturated hydrocarbons (e.g. ethane, propane, propylene) are used as the chain transfer agent. Of these chain transfer agents, an extremely small amount of unsaturated hydrocarbon is copolymerized.

The ethylenic copolymer of the present invention should generally have a melt flow index (measured under the condition 4 according to JIS K7210, hereinafter called "MFR") of 0.01 to 1000 g/10 min., preferably 0.05 to 500 g/10 min., particularly 0.1 to 500 g/10 min. If these ethylenic copolymers with an MFR of less than 0.01 g/10 min. are used, the moldability is undesirably decreased.

The methods for preparation of these ethylenic copolymers by copolymerization are well known in the art. Also, the method of the above ethylenic copolymer (A) by hydrolysis and/ modification with alcohol and the method for preparation of the ethylenic copolymer (B2) by the saponification method can be also practiced according to well known methods.

(D) Dibenzylidene sorbitol type compound

Also, the dibenzylidene sorbitol type compound to be used in the present invention may include those

represented by the following formula [formula (IV)] as typical examples.

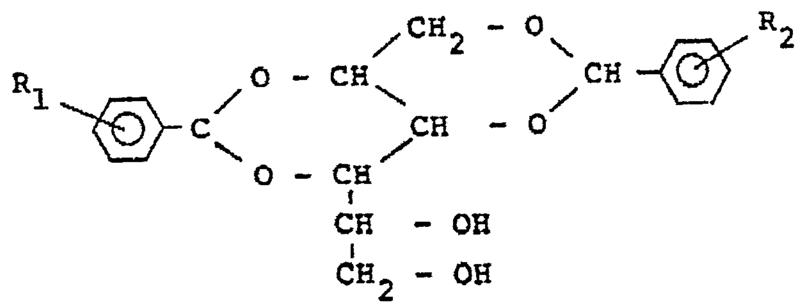

(IV)

In the formula (IV), $R_1$ and $R_2$, which may be either the same or different, are selected from the group consisting of hydrogen atom, chlorine atom or alkyl group having 1 to 8 (preferably 1 to 6) carbon atoms. Preferable examples of the dibenzylidene sorbitol type compound may include dibenzylidene sorbitol and mono or di-methyldibenzylidene sorbitol, propyldibenzylidene sorbitol, butyldibenzylidene sorbitol, hexyldibenzylidene sorbitol and chlorodibenzylidene sorbitol. Also, dibenzylidene sorbitol wherein either one of $R_1$ and $R_2$ is an alkyl group, and the other of $R_1$ and $R_2$ is hydrogen atom, chlorine atom or another alkyl can be used.

By addition of said dibenzylidene sorbitol type compound into the above ethylenic multi-component copolymer, the whitening tendency of said multi-component copolymer is reduced, to improve the transparency.

(D) Carboxylic Acid Ester Type Plasticizer

Also, as the carboxylic acid ester type plasticizer to be used in the present invention, those generally used in plastics may be employed. The kinds and physical properties of these plasticizers are described in "Handbook, Rubber·Plastic Formulating Chemicals" edited by Rubber Digest Co. (published by Rubber Digest Co., 1974), p. 145 to p 191.

Typical examples of the carboxylic acid ester type plasticizer may include esters of carboxylic acid

such as phthalic acid, adipic acid, azelaic acid, sebacic acid, maleic acid, fumaric acid, trimellitic acid, citric acid, oleic acid, ricinoleic acid, stearic acid and lauric acid with alcohols having 2 to 40 carbon atoms. Specific examples of these plasticizers may include di(iso)butyl phthalate, dihexyl phthalate, diisodecyl phthalate, butyloctyl phthalate, di-2-octyl phthalate, octyldecyl phthalate, butylphthalylbutyl glycolate, di-(2-ethylhexyl) adipate, octyldecyl adipate, benzyloctyl adipate, di-(2-ethylhexyl) azelate, diisooctyl azelate, di(iso)octyl sebacate, di-(2-ethylhexyl) maleate, dinonyl maleate, di-(2-ethylhexyl)fumarate-tri-(2-ethylhexyl) trimellitate, triisodecyl trimellitate, triisobutyl trimellitate, tri-n-butyl citrate, acetyl tri-(2-ethylhexyl citrate, methoxyethyl oleate, tetrahydrofulfuryl oleate, butylacetyl ricinolate, glyceryl monoricinolate, glyceryl monostearate, diethylene glycol distearate. Further, butyl coconut alkyl phthalate, esters of vegetable oil fatty acids, polyethylene glycol di-(2-ethylhexoate) can be also used.

Preparation of Mixture

(1) Mixing Ratio

In the preparation of the two component type mixture according to the present invention, the mixing ratio of the ethylenic copolymer (A) occupied in the total amount (sum) of the ethylenic copolymer (A), the ethylenic copolymer (B1) or the ethylenic copolymer (B2) in the mixture obtained is 1 to 99 wt.% [that is, the mixing ratio of the ethylenic copolymer (B1) or the ethylenic copolymer (B2) is 99 to 1 wt.%], desirably 5 to 95 wt.%, particularly preferably 10 to 90 wt.%. When the ethylenic copolymer (A) occupied in the total amount of the ethylenic copolymer (A) and the ethylenic copolymer (B1) for the ethylenic copolymer (B2) is less than 1 wt.% or when it exceeds 99 wt.%, crosslinking is insufficient when the mixture is crosslinked according

to the method as described below, and thus, for example, not only is the adhesiveness with the glass plate as described below inferior, but also the heat resistance is not good.

In preparation of a mixture of the three component system or more according to the present invention, the mixing ratio of the ethylenic copolymer (A) occupied in the total amount (sum) of the ethylenic copolymer (A), the ethylenic copolymer (B1) and the ethylenic copolymer (B2) in the mixture obtained is 40 to 99 wt.% [that is, the total amount of the mixing ratio of the ethylenic copolymer (B1) and the ethylenic copolymer (B2) is 60 to 1 wt.%], desirably 50 to 98 wt.%, above all preferably 55 to 95 wt.%.

When the mixing ratio of the ethylenic copolymer (A) occupied in the total amount of the ethylenic copolymer (A), the ethylenic copolymer (B1) and the ethylenic copolymer (B2) is less than 40 wt.% or when it is in excess of 99 wt.%, crosslinking is insufficient when the mixture is crosslinked according to the method as described below, and thus for example, not only is the adhesiveness with a glass plate as described below not good, but also the heat resistance, penetration resistance, and transparency are worsened.

Further, the ethylenic copolymer (B1) in the total amount of the ethylenic copolymer (B1) and the ethylenic copolymer (B2) is 1 to 99 wt.%, preferably 3 to 97 wt.%, particularly 5 to 95 wt.%. If the mixing ratio of the ethylenic copolymer (B1) in these ethylenic copolymers is less than 1 wt.%, foaming occurs during crosslinking as described below. On the other hand, if the ratio exceeds 99 wt.%, the crosslinking speed will be undesirably slow.

Further, the mixing ratio of the dibenzylidene sorbitol type compound based on 100 parts by weight of the total amount of the ethylenic copolymer (A), the ethylenic copolymer (B1) and/or (B2) is at most 5.0 parts

by weight, preferably 0.01 to 5.0 parts by weight, most preferably 0.05 to 5.0 parts by weight. Even if the dibenzylidene sorbitol type compound is added in an amount exceeding 5.0 parts by weight based on 100 parts by weight of the total amount of the ethylenic copolymers, a further improvement of transparency cannot be seen and it is disadvantageous in cost.

The mixing ratio of the carboxylic acid ester type plasticizer based on 100 parts by weight of the above ethylenic multi-component copolymer is at most 30 parts by weight, desirably 1.0 to 25 parts by weight, above all preferably 2.0 to 20 parts by weight. Even if the carboxylic acid ester type plasticizer is added in a mixing ratio in excess of 30 parts by weight based on the total amount of 100 parts by weight of the above ethylenic copolymers, a further improvement cannot be seen, but inconveniences such as bleeding and a lowering of the physical properties of resin mutually between intermediate films may be exhibited.

(2) Mixing Method

For the preparation of this mixture, these ethylenic copolymers, etc., may be mixed uniformly. As the mixing method, they can be dry blended by use of a mixer such as Henschel mixer or tumbler, as generally practiced in the field of olefinic polymers, or alternatively melted and kneaded by a kneading machine such as banbury or extruder and roll mill. In practicing this method, a more uniform mixture can be obtained by previously dry blending and melting and kneading the resultant blend. In the melting and kneading, the ethylenic copolymer (A) and the ethylenic copolymer (B1) and/or the ethylenic copolymer (B2) should not be substantially crosslinked (if crosslinked, not only is the moldability worsened in the molding of the mixture obtained as described below, but also the shape of the desired molded product or the heat resistance when the molded product is crosslinked may be lowered).

Accordingly, the temperature for melting and kneading, which may also depend on the kind and the viscosity of the ethylenic copolymers used, is preferably room temperature (20°C) to 150°C, more preferably not higher than 140°C.

As a measure of "not substantially crosslinked", "the residue with diameters of 0.1 micron or more after treated by extraction in boiling toluene for 3 hours" (hereinafter called "extraction residue") is generally preferred to be 15 wt.% or less, preferably 10 wt.% or less, optimally 5 wt.% or less.

In the preparation of this mixture, stabilizers for oxygen, light (UV-rays), and heat generally employed in the field of olefinic polymers, antistatic agents, lubricants, pigments (colorants), processability improvers and tackiness improvers, or other additives, may be added within the range which does not impair the characteristics (physical properties) possessed by the crosslinked product of the present invention. Further, by the addition of a crosslinking promoter such as primary to tertiary monoamine, p-toluenesulfonic acid and quaternary ammonium salt, crosslinking of the ethylenic copolymer (A) with ethylenic copolymer (B1) and the ethylenic copolymer (B2) can be further completed. The amount added may be generally at most 5.0 parts by weight, preferably 0.01 to 3.0 parts by weight based on 100 parts by weight of these resins.

Preparation of Thin Product (Noncrosslinked Intermediate Film)

When the thin product of the present invention is utilized in shape of a film or a sheet, a thin product can be obtained by extrusion into a film or a sheet by use of an extruder or rolls according to the T-die film method, the inflation method, and the calendering method generally employed in the field of thermoplastic resins. In this case, the extrusion temperature is 250°C or lower. If extruded at a temperature higher than 250°C,

a part of the ethylenic copolymer (A) and the ethylenic copolymer (B1) and/or the ethylenic copolymer (B2) may be crosslinked to generate small masses of gel-like matter, and thus a uniform extruded product cannot be obtained. Accordingly, the extrusion temperature is within the same temperature range as in the case of the melting and kneading as described above, whether or not the crosslinking accelerator is added (formulated).

In either of the cases mentioned above, after preparation of the thin product, to prevent adhesion between the thin products or with the withdrawing roll, the product is quenched with water cooling rolls, or in a water tank, to obtain a thin product with a good transparency. The thin product thus obtained generally has a thickness of 5 microns to 2 mm, preferably 5 microns to 1.5 mm, most preferably 10 microns to 1.0 mm.

The thin product (noncrosslinked intermediate film) may be embossed on the surface by passing through embossing rolls for gas removal during lamination with glass and prevention of blocking of the sheets. Also, it may be crosslinked as described below before plastering with the glass plate.

Preparation of Crosslinked Intermediate Film

By subjecting the above uncrosslinked intermediate film (thin product) to a heating treatment, the crosslinking reaction (condensation reaction) occurs between the comonomer component (1) of the ethylenic copolymer (A) and the comonomer component of the ethylenic copolymer (B1) and/or the comonomer component (4) of the ethylenic copolymer (B2), whereby an intermediate film for laminated glass having an improved strength and remarkably improved hot water resistance, penetration resistance, and transparency can be obtained. Heating treatment of the thin product may be practiced according to any of roll heating, belt heating, oven heating, etc. Heating may be effected by

BAD ORIGINAL

BAD ORIGINAL

any system of electrical heating, steam, IR-ray heater, induction heating system. Crosslinking is effected by heating at a temperature range of 110 to 380°C for about 10 seconds to 40 minutes to the above extraction residue of 15 to 90 wt.%. If the extraction residue is less than 15 wt.%, the strength and penetration resistance of the thin product (intermediate film) cannot be improved, and the hot water resistance, transparency and mutual adhesion between intermediate films are worsened. On the other hand, if exceeding 90 wt.%, the strength of the thin product is lowered and the penetration resistance is lowered, and the adhesiveness with a glass is worsened.

The glass plates to be used in the present invention may be previously washed and defatted if desired to increase the adhesiveness with the intermediate film. Also, the adhesion area may be physically increased by causing an unevenness on the surface layer, whereby the anchoring effect can be also expected. Further, a primer can be also used. The thickness of the glass plate may be generally 0.5 mm to 30 mm, preferably 0.5 mm to 25 mm, most preferably 1 mm to 20 mm.

As the kinds of glass plate, there may be included commercially available glass plate such as ordinary glass, polished plate glass, float plate glass, soda lime glass, borosilicate glass, lead glass, quartz glass, phosphoric acid glass, reinforced glass, etc. These glass plates are industrially produced and utilized in various fields, and their preparation methods, compositions, various physical properties are well known. The kind and the thickness of the glass plate to be used in the present invention are not necessarily required to be the same, but different kinds and thicknesses may be used in combination.

In the preparation of the laminated glass of the present invention, as the preparation method thereof, there are the method in which the above glass plate and

the above noncrosslinked intermediate film are plastered and the method in which the glass plate is plastered with a partially crosslinked intermediate film.

In the former method, crosslinking of the intermediate film of the mixture of the ethylenic copolymer (A), the ethylenic copolymer (B1) and/or the ethylenic copolymer (B2) has not substantially proceeded (the above residue is generally 15 wt.% or less, preferably 10 wt.% or less, more preferably 5 wt.% or less), and therefore, it exhibits the same behavior as the intermediate film of an ordinary olefinic polymer (film, sheet).

Accordingly, by subjecting the intermediate film and the above glass plate to heating and pressurization treatment as described below, the crosslinking reaction (condensation reaction) of the comonomer component (1) of the ethylenic copolymer (A) with the comonomer component (3) of the ethylenic copolymer (B1) and the comonomer (4) of the ethylenic copolymer (B2) occurs, whereby the laminated glass of the present invention is obtained which not only has a remarkably high adhesiveness and transparency, but also a remarkably improved penetration resistance and heat resistance of the intermediate film.

By lamination of the crosslinked product of the above mixture on the intermediate layer, the laminated glass of the present invention can be obtained. The preparation method can be practiced by subjecting the above noncrosslinked mixture or the intermediate film to the method generally practiced in the field of thermosetting or thermoplastic resins such as the press molding, stamping molding, dipping molding, injection molding, roll molding, vacuum bag method, low pressure transfer method, etc. As the most usual method, the above noncrosslinked intermediate film may be sandwiched between two sheets of glass plate, and adhesion and crosslinking simultaneously conducted under the heating

and pressurization treatment conditions as described below according to the press molding method. For plastering, the one step or the two step adhesion methods may be employed. The one step adhesion method is the method in which a main adhesion and crosslinking are practiced without the tentative adhesion in the first step as described below.

The two step method first sandwiches the above noncrosslinked intermediate film between glass plates, and exerts pressure by passing them through two rubber rolls. Also, it may be practiced by the method using a vacuum bag. The pressure in this operation is generally 1 to 10 $kg/cm^2$. Next, the main adhesion in the second step is conducted. As the method for main adhesion of the tentatively adhered product, there are the method in which a heating and pressurization treatment is conducted by an electrically heated plate press device, the method in which the heating and pressurization treatment is conducted by evacuation for pressurization by an autoclave, and the method in which these methods are combined, thus continuously performing adhesion and crosslinking. The temperature during adhesion and crosslinking by heating may be generally in the range of 80 to 240°C for adhesion, and in the range of 110 to 360°C for crosslinking. The pressure for adhesion is 0.1 to 30 $kg/cm^2$. On the other hand, the time of the crosslinking treatment may be shortened as the temperature is higher, but is generally 30 seconds to 40 minutes at 110 to 200°C, preferably 10 seconds to about 2 minutes at 200 to 360°C. The important point is that there is no air existing between the above mixture or the intermediate film thereof and the glass plates at the inlet of pressurization rolls.

In the preparation of the laminated glass of the present invention, the glass plate used may be two sheets or more, but the crosslinked product of the above intermediate film must be imposed between the glass

plates.

INDUSTRIAL UTILITY

The intermediate film for laminated glass thus obtained only has an excellent adhesiveness with glass, but also has a good hot water resistance and penetration resistance, and yet has an excellent transparency and a good adhesion workability.

Examples and Comparative Examples

The present invention is described in more detail by referring to Examples, which in no way limit the scope of the present invention. The ethylenic copolymers used in the Examples and Comparative examples are shown below.

(A) Ethylenic Copolymer (A)

As the ethylenic copolymer (A), a ternary copolymer of ethylene-maleic anhydride-methyl methacrylate with an MFR of 2.5 g/10 min. [copolymerized ratio of maleic anhydride 0.5 mol%, copolymerized ratio of methyl methacrylate 7.2 mol%, hereinafter called "(A-1)"], ternary copolymer of ethylene-fumaric acid-methyl methacrylate with an MFR of 3.2 g/10 min. [copolymerized ratio of fumaric acid 0.8 mol%, copolymerized ratio of methyl methacrylate 6.8 mol%, hereinafter called "(A-2)"] and a ternary copolymer of ethylene-methyl half ester of maleic acid-methyl methacrylate with an MFR of 4.3 g/10 min. "copolymerized ratio of methyl half ester of maleic acid 0.5 mol%, copolymerized ratio of methyl methacrylate 7.2 mol%, hereinafter called "(A-3)"] were employed.

(B1) Ethylenic Copolymer (B1)

Also, as the ethylenic copolymer (B1), a ternary copolymer of ethylene-glycidyl methacrylate-vinyl acetate with an MFR of 7.08/10 min. [copolymerized ratio of glycidyl methacrylate 1.0 mol%, copolymerized ratio of vinyl acetate 2.3 mol%, hereinafter called "(B1-1)"], a ternary copolymer of ethylene-glycidyl methacrylate-methyl methacrylate with an MFR of 12 g/10 min.

(copolymerized ratio of glycidyl methacrylate 0.5 mol%, copolymerized ratio of methyl methacrylate 5.1 mol%, hereinafter called "(B1-2)") and a ternary copolymer of ethylene-glycidyl methacrylate-vinyl acetate with an MFR of 7.1 g/10 min. (copolymerized ratio of glycidyl methacrylate 0.01 mol%, copolymerized ratio of vinyl acetate 2.3 mol%, hereinafter called "(B1-3)") were employed.

(B2) Ethylenic Copolymer (B2)

Further, as the ethylenic copolymer (B2), a ternary copolymer of ethylene-hydroxyethyl methacrylate-methyl methacrylate with an MFR of 9.4 g/10 min. (copolymerized ratio of hydroxyethyl methacrylate 0.2 mol%, copolymerized ratio of methyl methacrylate 5.0 mol%, hereinafter called "(B2-1)"), a ternary copolymer of ethylene-vinyl alcohol-vinyl acetate with an MFR of 18 g/10 min. (copolymerized ratio of vinyl alcohol 10.2 mol%, copolymerized ratio of vinyl acetate 4.9 mol%, hereinafter called "(B2-2)"), a ternary copolymer of ethylene-aminoethyl methacrylate-methyl methacrylate with an MFR of 7.0 g/10 min. (copolymerized ratio of aminoethyl methacrylate 2.9 mol%, copolymerized ratio of methyl methacrylate 4.0 mol%, hereinafter called "(B2-3)") and a ternary copolymer of ethylene-hydroxyethyl methacrylate-methyl methacrylate with an MFR of 8.7 g/10 min. (copolymerized ratio of hydroxyethyl methacrylate 0.01 mol%, copolymerized ratio of methyl methacrylate 5.0 mol%, hereinafter called "(B2-4)") were employed.

Examples 1 - 4 and Comparative Examples 1 - 2

As the mixture of the ethylenic copolymer (A) and the ethylenic copolymer (B1) or the ethylenic copolymer (B2), a mixture comprising an ethylene-acrylic acid copolymer with an MFR of 300 g/10 min. (density 0.954 $g/cm^3$, copolymerized ratio of acrylic acid 20 wt.%, hereinafter called "EAA") and a saponified product obtained by saponification of an ethylene-vinyl

acetate copolymer containing 28 wt.% of copolymerized ratio of vinyl acetate (saponification degree 97.5%, M.I. 75 g/10 min., density 0.951 g/$cm^3$, hereinafter called "saponified product") [mixing ratio 50 : 50 (weight ratio), hereinafter called "mixture (I)"], a mixture of an ethylene-methacrylic acid copolymer with an MFR of 200 g/10 min. (density 0.950 g/$cm^3$, copolymerized ratio of methacrylic acid 25 wt.%) and the above saponified product [mixing ratio 50 : 50 (weight ratio), hereinafter called "mixture (2)"], a mixture of a ternary copolymer of ethylene-ethyl acrylate-maleic anhydride with an MFR of 212 g/10 min. (copolymerized ratio of ethyl acrylate 30.7 wt.%, copolymerized ratio of maleic anhydride 1.7 wt.%, hereinafter called "EAM") and a ternary copolymer of ethylene-methyl methacrylate-hydroxymethacrylate with an MFR of 123 g/10 min. (copolymerized ratio of methyl methacrylate 20.7 wt.%, copolymerized ratio of hydroxyl methacrylate 11.7 wt.%) [mixing ratio 50 : 50 (weight ratio), hereinafter called "mixture (III)"] and a mixture of a ternary copolymer of ethylene-methyl methacrylate-maleic anhydride with an M.I. of 105 g/10 min. (copolymerized ratio of methyl methacrylate 20.5 wt.%, copolymerized ratio of maleic anhydride 3.1 wt.%) and a ternary copolymer of ethylene-methyl methacrylate-glycidyl methacrylate (copolymerized ratio of methyl methacrylate 18.6 wt.%, copolymerized ratio of glycidyl methacrylate 12.7 wt.%, hereinafter called "GMA") [mixing ratio 30 : 70 (weight ratio), hereinafter called "mixture (IV)"] were employed. These mixtures were prepared by dry blending the respective copolymers or ternary copolymers by use of a Henschel mixer for 5 minutes.

The mixtures (I) to (IV) obtained as described above and EAA and the saponified product were molded into a sheet having a thickness of 400 microns by an extruder equipped with a T die (diameter 40 mm, dice width 30 cm, rotational number 85/min.) under the

cylinder temperature conditions shown in Table 1. The sheets obtained were subjected to measurement of the above extraction residue. In all cases, the extraction residue was 0%.

Table 1

| Example No. | Kinds of mixtures, etc. | Cylinder temperature (°C) | | Dice temperature (D) |
|---|---|---|---|---|
| | | $C_1$ | $C_2$ | (°C) |
| Example 1 | Mixture (I) | 120 | 120 | 125 |
| " 2 | Mixture (II) | 110 | 115 | 120 |
| " 3 | Mixture (III) | 115 | 120 | 120 |
| " 4 | Mixture (IV) | 115 | 115 | 120 |
| Comparative example 1 | EAA | 120 | 140 | 140 |
| " 2 | Saponified product | 120 | 140 | 140 |

Examples 1 - 4 and Comparative Examples 1, 2

As the intermediate layer between the two sheets of glass plate (thickness 3 mm), the respective surfaces of which were previously subjected to defatting, the sheet of the above mixtures (I) to (IV) or EAA or the saponified product (thickness 0.4 mm) was sandwiched, and adhesion was effected at 180°C under a pressure of 10 kg/$cm^2$ (gauge pressure) for 5 minutes. Each laminated product obtained was subjected to crosslinking treatment at a temperature of 260°C under a pressure of 20 kg/$cm^2$ (gauge pressure) for 3 minutes to prepare a laminated glass.

Each of the laminated glasses obtained was subjected to measurement of the shearing peel-off strength between the glass plate according to JIS K6850 at a temperature of 80°C. Also, visible ray transmittance was measured according to JIS R3212, and the impact strength test was conducted by dropping from a height of 9 mm according to JIS R3212. Further, a heat resistance test was conducted at 65°C according to JIS R3212. The results are shown in Table 2.

The results of the impact resistance test are shown as follows.

o: no penetration

x: penetration

Also, the results obtained of the heat resistance test are shown as follows.

o: no change

x: peeling at rim portion

Table 2

| Example No. | Shearing peel-off strength ($kg/cm^2$) | Visible ray trans-mittance | Impact resist-ance test | Heat resist-ance test |
|---|---|---|---|---|
| Example 1 | 100 | 95 | o | o |
| " 2 | 90 | 95 | o | o |
| " 3 | 105 | 95 | o | o |
| " 4 | 120 | 95 | o | o |
| Comparative example 1 | 1 or less | 92 | x | x |
| " 2 | 13 | 92 | x | x |

<u>Examples 5 - 9, Comparative Examples 3 - 8</u>

The ethylenic copolymer (A), the ethylenic copolymer (B1) and ethylenic copolymer (B2), the respective mixing ratios of which are shown in Table 3, were dry blended by a Henschel mixer for 5 minutes.

Each mixture thus obtained was molded into a sheet having a thickness of 0.76 mm by an extruder equipped with a T die (diameter 40 mm, dice width 30 cm, rotational number 85/min.) under cylinder temperatures of ($C_1$ 100°C, $C_2$ 130°C) and a dice temperature of 130°C. The sheet obtained was subjected to measurement of the above extraction residue. In all cases, the extraction residue was 0%.

Each sheet obtained was subjected to a heating treatment on a Teflon sheet in an oven at a heating temperature and heating time shown in Table 3. The extraction residue of the sheet obtained (intermediate film) is shown in Table 3.

[Application Example]

As the intermediate layer between the two glass plates (thickness 2.5 mm) previously subjected to defatting of the respective surfaces, the above sheet (thickness 0.76 mm) was sandwiched and adhesion was effected at 140°C under a pressure of 10 $kg/cm^2$ (plane pressure).

Each laminated glass obtained was subjected to measurements of the shearing peel-off strength between the respective glasses according to JIS K6850. Also, the haze was measured according to ASTM D-1003, and the penetration resistance test was conducted by dropping from a height of 4 m according to JIS R3212. Further, a hot water resistance test was conducted according to JIS R3212. The results of the shearing peel-off strength and haze of the respective glass plates are shown in Table 3.

Table 3

| Example or Comparative example No. | Ethylenic copolymer (A) Kind | Ethylenic copolymer (A) Composition ratio (wt.%) | Ethylenic copolymer (B1) Kind | Ethylenic copolymer (B1) Composition ratio (wt.%) | Ethylenic copolymer (B2) Kind | Ethylenic copolymer (B2) Composition ratio (wt.%) | Cross-linking degree toluene extraction residue (%) | Heating temperature (°C) | Time (min.) | Peel-off strength (kg/cm$^2$) | Haze (%) |
|---|---|---|---|---|---|---|---|---|---|---|---|
| Example 5 | (A-1) | 80 | (B1-1) | 15 | (B2-1) | 5 | 64 | 200 | 5 | 50 | 1.0 |
| " 6 | " | 80 | (B1-2) | 15 | (B2-2) | 5 | 48 | 200 | 5 | 46 | 0.8 |
| " 7 | (A-2) | 80 | (B1-1) | 15 | " | 5 | 35 | 200 | 5 | 73 | 1.1 |
| " 8 | (A-3) | 80 | " | 15 | " | 5 | 42 | 200 | 5 | 41 | 1.3 |
| " 9 | (A-1) | 80 | " | 15 | (B2-3) | 5 | 51 | 200 | 5 | 58 | 1.0 |
| Comparative example 3 | (A-1) | 80 | (B1-2) | 15 | (B2-2) | 5 | 98 | 280 | 40 | 20 | 1.1 |
| " 4 | " | 80 | " | 15 | " | 5 | 6 | 140 | 5 | 70 | 4.3 |
| " 5 | " | 99.8 | (B1-1) | 0.1 | " | 0.1 | 13 | 200 | 5 | 80 | 1.0 |
| " 6 | " | 80 | (B1-3) | 15 | (B2-4) | 5 | 10 | 200 | 5 | 64 | 1.0 |
| " 7 | " | 80 | (B1-1) | 20 | - | - | 12 | 200 | 5 | 60 | 1.3 |
| " 8 | " | 80 | - | - | (B2-2) | 20 | 45 | 200 | 5 | 40 | 1.4 |

Also, using the sheet (intermediate film) obtained by Examples 5 - 9, penetration resistance tests of the laminated glass produced were conducted, and penetration did not occur in any of the cases. On the other hand, penetration occurred in the laminated glasses produced by using the sheets obtained in Comparative examples 3 - 8. Also, a hot water resistance test was conducted by use of the laminated glasses by using the sheets obtained in Examples 5 - 9, but no change was observed in any of the cases. In contrast, in the laminated glasses produced by using the sheets obtained in Comparative examples 3 - 8, the brim portion was peeled off in each case.

Examples 10 - 16, Comparative Examples 9 - 14

Mixtures were prepared by dry blending the ethylenic copolymer (A), the ethylenic copolymer (B1), and the ethylenic copolymer (B2), the respective mixing ratios of which are shown in Table 4, and 0.2 parts by weight of dibenzylidene sorbitol (not formulated in Comparative examples 9 - 14) by use of a Henschel mixer for 5 minutes. Each mixture obtained was kneaded by an extruder at a resin temperature of 120°C into pellets (mixture).

Each mixture thus obtained was molded into a sheet having a thickness of 0.76 mm by an extruder equipped with T die (diameter 40 mm, dice width 400 mm, rotational number 85/min.) under the cylinder temperatures ($C_1$ 100°C, $C_2$ 100°C, $C_3$ 130°C), and a dice temperature of 120°C. The sheets obtained were subjected to the measurement of the above extraction residue. In all cases, the extraction residue was 0%.

[Application Example]

The above sheet (thickness 0.76 mm) was sandwiched as the intermediate layer between the two sheets of glass plate (thickness 2.5 mm) previously subjected to defatting of the respective substrate.

Each laminated product obtained was subjected to

the crosslinking treatment at a temperature of 260°C under pressurization of a plane pressure of 20 $kg/cm^2$ to produce a laminated glass. Each laminated glass obtained was subjected to measurement of each shearing peel-off strength between the glass plate according to JIS K6850. Also, haze was measured according to ASTM D-1003, and the whitening characteristic by measuring the haze after annealing at a temperature of 60°C for 36 hours.

Also, a penetration resistance test was conducted by dropping from a height of 4 mm according to JIS R3212. Further, a hot water resistance test was conducted according to JIS R3212. The results of shearing peel-off strength and haze of the respective glass plate are shown in Table 4.

Table 4

| Example No. | Ethylenic copolymer (A) Kind | Composition ratio (wt.%) | Ethylenic copolymer (B1) Kind | Composition ratio (wt.%) | Ethylenic copolymer (B2) Kind | Composition ratio (wt.%) | Cross-linking degree toluene extraction residue (%) | Heating temperature (°C) | Time (min.) | Peel-off strength ($kg/cm^2$) | Transparency haze (%) | Whitening characteristic 60°C after 36 hours annealing haze (%) |
|---|---|---|---|---|---|---|---|---|---|---|---|---|
| Example 10 | (A-1) | 80 | (B1-1) | 15 | (B2-1) | 5 | 64 | 200 | 5 | 50 | 0.4 | 0.4 |
| " 11 | " | 80 | (B1-2) | 15 | (B2-2) | 5 | 48 | 200 | 5 | 46 | 0.3 | 0.4 |
| " 12 | (A-2) | 80 | (B1-1) | 15 | " | 5 | 35 | 200 | 5 | 73 | 0.4 | 0.5 |
| " 13 | (A-3) | 80 | " | 15 | " | 5 | 42 | 200 | 5 | 41 | 0.5 | 0.8 |
| " 14 | (A-1) | 80 | " | 15 | (B2-3) | 5 | 51 | 200 | 5 | 58 | 0.4 | 0.4 |
| " 15 | " | 80 | " | 20 | - | - | 20 | 200 | 5 | 60 | 0.3 | 0.4 |
| " 16 | " | 80 | - | - | (B2-2) | 20 | 50 | 200 | 5 | 40 | 0.4 | 0.5 |
| Comparative example 9 | (A-1) | 80 | (B1-2) | 15 | (B2-2) | 5 | 98 | 280 | 40 | 20 | 1.1 | 2.3 |
| " 10 | " | 80 | " | 15 | " | 5 | 6 | 140 | 5 | 70 | 4.3 | 7.1 |
| " 11 | " | 99.8 | (B1-1) | 0.1 | " | 0.1 | 13 | 200 | 5 | 80 | 1.0 | 4.0 |
| " 12 | " | 80 | (B1-3) | 15 | (B2-4) | 5 | 10 | 200 | 5 | 64 | 1.0 | 4.7 |
| " 13 | " | 80 | (B1-1) | 20 | - | - | 12 | 200 | 5 | 60 | 1.3 | 5.1 |
| " 14 | " | 80 | - | - | (B2-2) | 20 | 45 | 200 | 5 | 40 | 1.4 | 4.9 |

Also, when a penetration resistance test was conducted for the laminated glass plate prepared by use of the sheet (intermediate film) obtained in Examples 10 - 16, penetration did not occur in any of the cases. On the other hand, penetration occurred in all of the laminated glasses prepared by using the sheets obtained in Comparative examples 9 - 14. Also, a hot water resistance test was conducted of the laminated glasses prepared by using the sheets obtained in Examples 10 - 16, but no change was observed in any of the cases. In contrast, in the laminated glasses prepared by using the sheets obtained in Comparative examples 9 - 14, the brim portion was peeled-off in each case.

Examples 17 - 20

By using the above (A-1), (B1-2) and B2 as the ethylenic copolymers, the composition ratios of which are shown in Table 5, and dioctyl sebacate (hereinafter called "DOS") or dioctyl phthalate (hereinafter called "DOP") as the plasticizer, a dry blend was performed previously in the same manner as in Example 5. Each mixture obtained was formed into a sheet by using the extrudate in the same manner as in Example 5. By using the respective sheets, laminated glasses were prepared in the same manner as in Example 5.

The haze and the haze after annealing and penetration resistance of the laminated glasses obtained were measured. The results are shown in Table 5.

Table 5

| Example | Ethylenic copolymer (A) | | Ethylenic copolymer (B1) | | Ethylenic copolymer (B2) | | Amount of plasticizer added (part by wt.) | Trans-parency haze (%) | Whitening charac-teristic 60°C after 36 hours annealing, haze (%) | Penetration resistance JIS R3212 2.25 kg x 4 m height |
|---|---|---|---|---|---|---|---|---|---|---|
| | Kind | Compo-sition ratio (wt.%) | Kind | Compo-sition ratio (wt.%) | Kind | Compo-sition ratio (wt.%) | | | | |
| 17 | (A-1) | 80 | (B1-2) | 20 | (B2) | - | DOS 10 | 0.1 | 0.2 | o |
| 18 | " | 80 | " | 20 | " | - | DOP 10 | 0.2 | 0.3 | o |
| 19 | " | 80 | " | 15 | " | 5 | DOS 10 | 0.1 | 0.2 | o |
| 20 | " | 80 | " | 15 | " | 5 | DOP 10 | 0.2 | 0.3 | o |

Effect of the Invention

The intermediate film for laminated glass according to the present invention exhibits the effects as shown below, including the preparation steps thereof.

(1) Due to the excellent heat resistance of the intermediate film (thin product), no peel-off occurred at a high temperature.

(2) Due to substantially no water content in the intermediate film, moisture management in the plastering step is easy, whereby the preparation steps can be simplified.

(3) Due to the excellent water resistance of the intermediate film, no peel-off occurs under high humidity condition or in water.

(4) The adhesiveness of intermediate film is excellent and yet the penetration resistance of the laminated glass is good.

(5) Transparency is excellent.

The intermediate film for laminated glass of the present invention, which exhibits the effects mentioned above, can be utilized in various fields. Typical uses may include glasses such as the windscreens of automobiles, windows for buildings, glass used in ships, and intermediate films for glasses for vehicles other than automobiles.

CLAIMS

1. An intermediate film for laminated glass, comprising a mixture of ethylenic copolymers which comprises 1 to 99 wt.% of (A) an ethylenic copolymer of ethylene at copolymerized ratio of 50 to 99.98 mol%, an unsaturated monocarboxylic acid having 3 to 30 carbon atoms or an unsaturated dicarboxylic acid having 4 to 30 carbon atoms anhydride thereof and/or half ester obtained by alcoholic modification of these at copolymerized ratio of 0.01 to 20 mol% and an unsaturated carboxylic acid ester having at most 30 carbon atoms and/or a vinyl ester having at most 30 carbon atoms at copolymerized ratio of at most 30 mol%, or, of these multi-component copolymers, a modified product obtained by converting the copolymer having dicarboxylic acid group and/or dicarboxylic acid anhydride group into half ester with alcohol and 99 to 1 wt.% of (B1) an ethylenic copolymer of ethylene at copolymerized ratio of 50 to 99.98 mol%, an epoxy type compound having epoxy group and at least one double bond with 6 to 30 carbon atoms at copolymerized ratio of 0.02 to 20 mol%, and the above unsaturated carboxylic acid ester and/or vinyl ester at copolymerized ratio of at most 30 mol% or (B2) an ethylenic copolymer of ethylene at copolymerized ratio of 50 to 99.98 mol%, at least one monomer having hydroxyl group and/or amino group and at least one double bond with carbon atoms with at most 30 carbon atoms at copolymerized ratio of 0.02 to 20 mol%, and further the above unsaturated carboxylic acid ester and/or vinyl ester at copolymerized ratio of at most 30 mol%.

2. An intermediate film for laminated glass, comprising a mixture of ethylenic copolymers which comprises 40 to 99 wt.% of (A) an ethylenic copolymer of ethylene at copolymerized ratio of 50 to 99.98 mol%, an unsaturated monocarboxylic acid having 3 to 30 carbon atoms or an unsaturated dicarboxylic acid having 4 to 30 carbon atoms anhydride thereof and/or half ester obtained

by alcoholic modification of these at copolymerized ratio of 0.01 to 20 mol% and an unsaturated carboxylic acid ester having at most 30 carbon atoms and/or a vinyl ester having at most 30 carbon atoms at copolymerized ratio of at most 30 mol%, or of these multi-component copolymers, a modified product obtained by converting the copolymer having dicarboxylic acid group and/or dicarboxylic acid anhydride group into half ester with alcohol and (B1) an ethylenic copolymer of ethylene at copolymerized ratio of 50 to 99.98 mol%, an epoxy type compound having epoxy group and at least one double bond with 6 to 30 carbon atoms at copolymerized ratio of 0.02 to 20 mol%, and the above unsaturated carboxylic acid ester and/or vinyl ester at copolymerized ratio of at most 30 mol% and (B2) an ethylenic copolymer of ethylene at copolymerized ratio of 50 to 99.98 mol%, at least one monomer having hydroxyl group and/or amino group and at least one double bond with carbon atoms with at most 30 carbon atoms at copolymerized ratio of 0.02 to 20 mol%, and further the above unsaturated carboxylic acid ester and/or vinyl ester at copolymerized ratio of at most 30 mol%, the mixing ratio of (B1) occupied in the total amount of (B1) and (B2) being 1 to 99 wt.%.

3. An intermediate film according to claim 1, wherein the ethylenic copolymer mixture further comprises (C) a dibenzylidene sorbitol or substituted dibenzylidene sorbitol, and the mixing ratio of the dibenzylidene sorbitol and substituted dibenzylidene sorbitol per 100 parts by weight of the total amount of these ethylenic copolymers is at most 5.0 parts by weight.

4. An intermediate film according to claim 2, wherein the ethylenic copolymer mixture further comprises (C) a dibenzylidene sorbitol or substituted dibenzylidene sorbitol, and the mixing ratio of the dibenzylidene sorbitol and substituted dibenzylidene sorbitol per 100 parts by weight of the total amount of these ethylenic copolymers is 0.01 to 5.0 parts by weight.

5. An intermediate film according to claim 1 or claim 3, wherein the ethylenic copolymer mixture further contains 1.0 to 30 parts by weight of (D) a carboxylic acid ester type plasticizer per 100 parts by weight of the total amount of the above ethylenic copolymers.

6. An intermediate film according to claim 2 or claim 4, wherein the ethylenic copolymer mixture further contains 1.0 to 30 parts by weight of (D) a carboxylic ester type plasticizer per 100 parts by weight of the total amount of the above ethylenic copolymers.

# INTERNATIONAL SEARCH REPORT

International Application No PCT/JP86/00569

**I. CLASSIFICATION OF SUBJECT MATTER** (if several classification symbols apply, indicate all)[1]

According to International Patent Classification (IPC) or to both National Classification and IPC

Int.Cl$^4$ C03C27/12, C09J3/14, B32B17/04

**II. FIELDS SEARCHED**

Minimum Documentation Searched[4]

| Classification System | Classification Symbols |
|---|---|
| IPC | C03C27/12, C08L23/08, C09J3/14, B32B17/04 |

Documentation Searched other than Minimum Documentation to the Extent that such Documents are Included in the Fields Searched[5]

**III. DOCUMENTS CONSIDERED TO BE RELEVANT**[14]

| Category* | Citation of Document, with indication, where appropriate, of the relevant passages | Relevant to Claim No[18] |
|---|---|---|
| A | JP, A, 48-79817 (Imperial Chemical Industries Limited) 26 October 1973 (26. 10. 73) & FR, A, 2168354 & AU, A, 5095573 & US, A, 3952135 | 1, 2 |
| A | JP, A, 50-25642 (Sumitomo Chemical Co., Ltd.) 18 March 1975 (18. 03. 75) (Family: none) | 1, 2 |
| A | JP, A, 56-149356 (Sumitomo Chemical Co., Ltd.) 19 November 1981 (19. 11. 81) & EP, A, 39749 & CA, A, 1145238 | 1 |
| A | JP, A, 59-78958 (The Yokohama Rubber Co., Ltd.) 8 May 1984 (08. 05. 84) (Family: none) | 3, 4 |

* Special categories of cited documents:[15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search[2] | Date of Mailing of this International Search Report[2] |
|---|---|
| February 2, 1987 (02. 02. 87) | Feburary 9, 1987 (09. 02. 87) |
| **International Searching Authority**[1] | **Signature of Authorized Officer**[20] |
| Japanese Patent Office | |

Form PCT/ISA/210 (second sheet) (October 1981)

International Application No PCT/JP86/00569

FURTHER INFORMATION CONTINUED FROM THE SECOND SHEET

| | | |
|---|---|---|
| A | JP, A, 58-79848 (Bridgestone Tire Co., Ltd.) 13 May 1983 (13. 05. 83) & EP, A, 76709 & US, A, 4511627 | 5, 6 |
| A | JP, A, 60-192776 (Showa Denko Kabushiki Kaisha) 1 October 1985 (01. 10. 85) (Family: none) | 1 |

V.☐ OBSERVATIONS WHERE CERTAIN CLAIMS WERE FOUND UNSEARCHABLE[10]

This international search report has not been established in respect of certain claims under Article 17(2) (a) for the following reasons:

1.☐ Claim numbers........... because they relate to subject matter[12] not required to be searched by this Authority, namely:

2.☐ Claim numbers........... because they relate to parts of the international application that do not comply with the prescribed requirements to such an extent that no meaningful international search can be carried out[13], specifically:

VI.☐ OBSERVATIONS WHERE UNITY OF INVENTION IS LACKING[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.